# EUROPEAN PATENT APPLICATION

(11) **EP 1 267 151 A1**
(43) Date of publication of application: **18.12.2002**
(21) Application number: 02253802.9
(22) Date of filing: 30.05.2002
(51) Int. Cl.: G01K 1/14

(54) **Sensor clip**

(30) Priority: 14.06.2001 GB 0114474
(71) Applicant: Datapaq Limited, Cambridge, CB4 0GU (GB)
(72) Inventor: Budden, Ian, Cambridge CB4 0GU (GB); Offley, Stephen George, Cambridge CB4 0GU (GB); Bull, David Eric, Cambridge CB4 0GU (GB)
(74) Representative: Evens, Paul Jonathan

(57) **Abstract**

A clip (10) for positioning a sensor (70) relative to a substrate (60), particularly but not exclusively a temperature sensor (e.g. a thermocouple) used to obtain a temperature profile of a part of the substrate or surrounding environment as it passes through an industrial oven. The sensor clip comprises a first part (12) and a second part (14) slidably mounted with respect to the first part, the parts defining a pair of jaws (16,18) having opposed surfaces (20,22) for engaging sides of the substrate, with jaw separation being determined by linear movement of one part relative to the other.

## Description

The present invention relates to a clip for positioning a sensor relative to a substrate, particularly but not exclusively a temperature sensor (e.g. a thermocouple) used to obtain a temperature profile of a part of the substrate or surrounding environment as it passes through an industrial oven.

In automotive manufacture, paint is applied to the exterior of a vehicle body during assembly. In order to provide a tough coating with the correct physical properties, modern paint and powder coatings undergo a curing process which is both time and temperature dependent. Thus, both cure temperature and cure time need to be monitored in order to ensure a painted/coated object is cured correctly. For this reason, temperature sensors are attached to the interior of the vehicle body to monitor heat conducted through the body. (The sensors are mounted internally to avoid spoiling the paint finish on the vehicle body exterior).

In the past, various kinds of sensor clips have been used to attach the temperature sensors to the vehicle body interior. One of the clips is magnetic and is readily attached to ferrous panels used to fabricate the vehicle body. Another clip is a type of crocodile clip which is readily attached to exposed edges of panels and frames used to fabricate the vehicle body. In body cases, the sensor clips are simple and quick to position, enabling them to be fitted and removed from vehicle bodies on a moving conveyor.

The present applicant has appreciated that existing sensor clips have limitations. For example, magnetic clips cannot be attached to non-ferrous (e.g. aluminium or plastics) components. Also, the crocodile-type clip needs to be applied in a particular orientation which may make positioning the sensor in a location spaced from the point of attachment somewhat difficult.

In accordance with a first aspect of the present invention, there is provided a sensor clip for positioning a sensor relative to a substrate, comprising a first part and a second part slidably mounted with respect to the first part, the parts defining a pair of jaws having opposed surfaces for engaging sides of the substrate, with jaw separation being determined by linear movement of one part relative to the other.

The pair of jaws are opened and closed with a linear sliding action as opposed to the pincer action of the crocodile-type clips. The opposed surfaces of the jaws may remain substantially parallel to each other irrespective of jaw separation.

The sensor clip may further comprise a spring bias for urging the pair of jaws towards each other. The spring bias may be provided by a helical spring positioned to provide a force urging the jaws to a closed configuration.

The second part of the sensor clip may include a plunger extending through the first part, with movement of the plunger relative to the first part determining jaw separation. Thus, the first part may include a bore and the second part may include an elongate portion slidably received in the bore. The plunger may be configured to increase jaw separation when pushed through the first part. In this way, any unwanted protuberant part of the plunger is located on the opposite side of the first part to the pair of jaws.

The plunger may be configured to engage a central region of the opposed surface of the first part. In this way, the sensor clip may be applied at any orientation in a given plane, since the jaws may be engaged from any angle, 360° around the plunger.

In one embodiment, at least one of the opposed surfaces of the pair of jaws is circular. Although both of the opposed surfaces may be circular, the opposed surface of the first part may be larger than that of the second part.

In another embodiment, the jaw associated with the second part may be formed by a bracket configured so that the opposed surface thereby defined is non-planar. For example, at least one part of the bracket may have an L-shaped cross-section.

The first and second parts may be configured for one-handed actuation. Thus, the first part may include at least one finger grip, and the plunger may be configured for thumb actuation when the first part is finger held. The finger grip may include a member extending laterally of the direction of movement of one part relative to the other.

The sensor clip may further comprise a probe arm. The probe arm may be elongate and may be used to position the sensor in a location spaced from where the jaws engage the substrate. For example, the location may be a remote part of the substrate perhaps awkward to engage directly with a clip, or the location may be spaced from the substrate altogether (e.g. air temperature sensor). The probe arm may be resilient and configured to urge a sensor into intimate contact with surface which is to be sensed.

According to a second aspect of the present invention, there is provided a method of positioning a sensor relative to a substrate comprising the steps of: providing a sensor clip comprising a first part and a second part slidably mounted with respect to the first part, the parts defining a pair of jaws having opposed surfaces; and using the sensor clip to position the sensor by adjusting the jaw separation by linear movement of one part relative to the other to engage sides of the substrate between opposed surfaces of the jaws.

A specific embodiment of the invention will now be described in detail, by way of example, and with reference to the accompanying drawings in which:
Figure 1A is a perspective view from the side and above of a sensor clip embodying the present invention;
Figure 1B is a side view of the sensor clip of Figure 1A, in a "jaws closed" configuration;
Figure 1C is a side view of the sensor clip of Figure 1A, in a "jaws open" configuration;
Figure 1D is a side view of a sensor clip embodying the present invention, with one jaw formed by a bracket;
Figure 2 shows a method embodying the present invention; and
Figure 3 shows a measuring probe according to the invention *in situ* on a vehicle body.

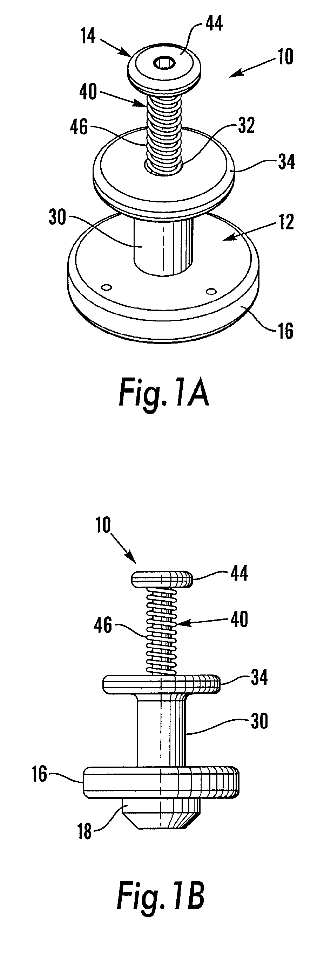

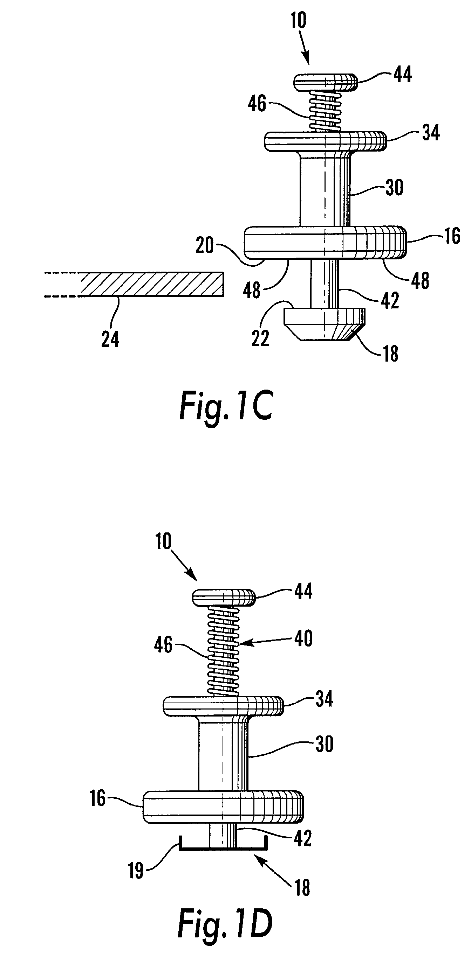

Figures 1A-1D show a sensor clip 10 embodying the present invention. The sensor clip 10 comprises a first part 12 and a second part 14 which is slidably mounted with respect to the first part 12. The parts (12,14) define a pair of jaws 16,18 having opposed surfaces 20,22 for engaging sides of a substrate 24. The jaws 16,18 are moved from the closed position of Figure 1B to the open position of Figure 1C by linear movement of one part relative to the other.

The first part 12 comprises a cylindrical body 30 with a bore 32 extending centrally therethrough. One end of the body 30 forms the opposed surface 20 of upper jaw 16 of the first part 12. The body 30 includes a flange 34 (which constitutes a member extending laterally of the direction of movement of one part relative to the other) which provides finger grips when the sensor clip 10 is held in one hand.

The second part 14 comprises a plunger 40 with a shaft 42 (which constitutes an elongate portion) which is slidingly received in the bore 32 in the first part 12. Lower jaw 18 of the second part 14 is attached to one end of the shaft 42, whilst a knob 44 is attached to the other. A helical spring 46 is fitted around the shaft 42 and bears against the first part 12 and the knob 44. The opposed surface 22 of the lower jaw 18 is circular, with the shaft 42 aligned with its centre. The plunger 40 is configured to engage a central region 48 of the opposed surface 20 of the first part 12.

Figure 1D shows another embodiment of the present invention. The parts of the sensor clip 10 of Figure 1D are as identified above with reference to Figure 1B, with the exception of lower jaw 18 which is formed by a bracket 19. Bracket 19 is shaped so that the opposed surface thereby defined is non-planar and suitable for engaging a substrate with a non-planar profile.

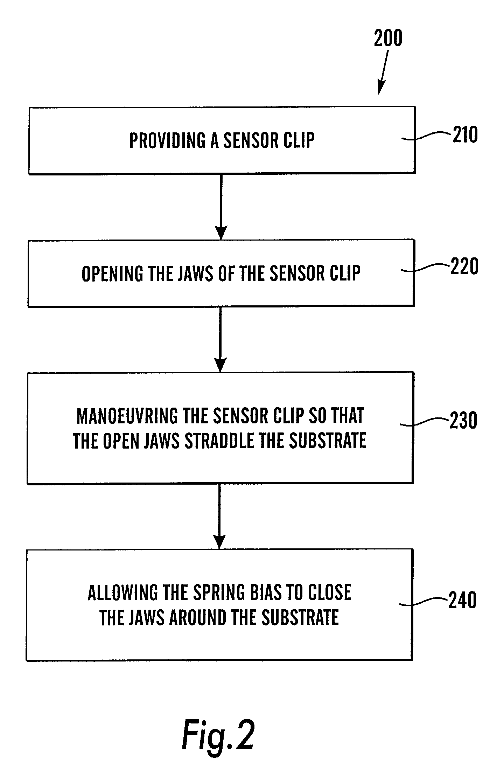

In use and with reference to the method 200 shown in Figure 2, the sensor clip 10 is held in one hand 210, with index and middle fingers positioned on opposite sides of the first part 12 behind the flange 34 and the thumb positioned on knob 44. The jaws, 16,18 are opened 220 by pushing the knob 44 towards the first part 12, against the bias provided by spring 46. The sensor clip is manoeuvred 230 so that the open jaws 16,18 straddle the substrate 24 before knob 44 is released. Once released, the spring 46 closes the jaws 16,18 around the substrate 24,240, clamping the sensor clip in position.

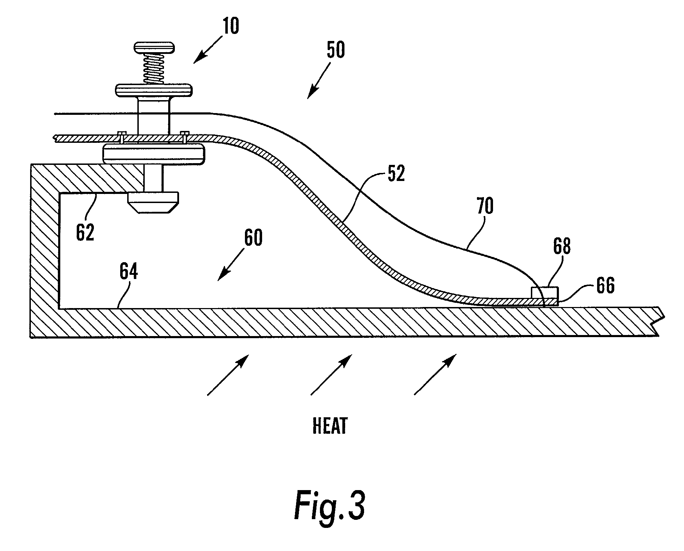

Figure 3 shows a measuring probe assembly 50, comprising a probe arm 52 mounted (e.g. bolted) on the sensor clip 10. The sensor clip 10 is illustrated mounted on a vehicle component 60 (e.g. door panel) which has an inner wall 62 and an outer wall 64 (which constitutes a surface to be sensed). The probe arm 52 is an elongate member of resilient material (e.g. spring steel) which has been shaped to bear against outer wall 64 when the sensor clip 10 is attached to the inner wall 62 as shown. The end 66 of the probe arm 52 which is in contact with the outer wall 64 includes an attachment 68 which positions a temperature sensor 70 so that heat conducted through outer wall 64 is measured.

## Claims

1. A sensor clip (10) for positioning a sensor (70) relative to a substrate (60), comprising a first part (12) and a second part (14) slidably mounted with respect to the first part, the parts defining a pair of jaws (16, 18) having opposed surfaces (20, 22) for engaging sides of the substrate, with jaw separation being determined by linear movement of one part relative to the other.

2. A sensor clip as claimed in claim 1, further comprising a spring bias (46) for urging the pair of jaws towards each other.

3. A sensor clip as claimed in claim 2, in which the spring bias is provided by a helical spring positioned to provide a force urging the jaws to a closed configuration.

4. A sensor clip as claimed in any of claims 1 to 3, in which the second part of the sensor clip includes a plunger (40) extending through the first part, with movement of the plunger relative to the first part determining jaw separation.

5. A sensor clip as claimed in claim 4, in which the first part includes a bore (32) and the second part includes an elongate portion (42) slidably received in the bore.

6. A sensor clip as claimed in claim 4 or claim 5, in which the plunger is configured to increase jaw separation when pushed through the first part.

7. A sensor clip as claimed in any preceding claim, in which the plunger is configured to engage a central region of the opposed surface of the first part.

8. A sensor clip as claimed in any preceding claim, in which at least one of the opposed surfaces of the pair of jaws is circular.

9. A sensor clip as claimed in claim 8, in which the opposed surface of the first part is larger than that of the second part.

10. A sensor clip as claimed in any preceding claim, in which the jaw associated with the second part is formed by a bracket configured so that the opposed surface thereby defined is non-planar.

11. A sensor clip as claimed in any preceding claim, in which the first and second parts are configured for one-handed actuation.

12. A sensor clip as claimed in claim 11, in which the first part includes at least one finger grip, and the plunger is configured for thumb actuation when the first part is finger held.

13. A sensor clip as claimed in claim 12, in which the finger grip includes a member extending laterally of the direction of movement of one part relative to the other.

14. A sensor clip as claimed in any preceding claim further comprising a probe arm (52).

15. A sensor clip as claimed in claim 14, in which the probe arm is elongate and is used to position the sensor in a location spaced from where the jaws engage the substrate.

16. A sensor clip as claimed in claim 14 or claim 15, in which the probe arm is resilient and configured to urge a sensor into intimate contact with a surface which is to be sensed.

17. A method of positioning a sensor (70) relative to a substrate (60) comprising the steps of:
providing a sensor clip (210) comprising a first part and a second part slidably mounted with respect to the first part, the parts defining a pair of jaws having opposed surfaces; and
using the sensor clip to position the sensor by adjusting the jaw separation by linear movement of one part relative to the other (220) to engage sides of the substrate between opposed surfaces of the jaws (230, 240).

18. A method of positioning a sensor relative to a substrate as claimed in claim 17, in which the sensor clip further comprises a spring bias for urging the pair of jaws towards each other, and the step of using the sensor clip to position the sensor comprises:
opening the jaws against the spring bias (220);
manoeuvring the sensor clip so that the open jaws straddle the substrate (230); and
allowing the spring bias to close the jaws around the substrate (240).
